**Europäisches Patentamt**

**European Patent Office**

**Office européen des brevets**

(11) Veröffentlichungsnummer: **0 177 435**
**B1**

(12) **EUROPÄISCHE PATENTSCHRIFT**

(45) Veröffentlichungstag der Patentschrift:
**07.12.88**

(21) Anmeldenummer: **85730118.8**

(22) Anmeldetag: **06.09.85**

(51) Int. Cl.⁴: **G 11 B 33/04**

(54) **Ablagemittel für Disketten.**

(30) Priorität: **07.09.84 DE 3433361**

(43) Veröffentlichungstag der Anmeldung:
**09.04.86 Patentblatt 86/15**

(45) Bekanntmachung des Hinweises auf die Patenterteilung:
**07.12.88 Patentblatt 88/49**

(84) Benannte Vertragsstaaten:
**AT BE CH DE FR GB IT LI NL SE**

(56) Entgegenhaltungen:
**EP-A- 0 050 336**
**EP-A- 0 056 685**
**DE-A- 2 647 986**
**DE-A- 3 241 616**
**DE-A- 3 400 024**
**DE-C- 1 157 920**
**DE-U- 7 302 816**

(73) Patentinhaber: **Hunke & Jochheim,**
**Westfalenstrasse 77-79, D-5860 Iserlohn (DE)**

(72) Erfinder: **Maier-Hunke, Horst-Werner, Poth's Kreuz 28,**
**D-5860 Iserlohn (DE)**
Erfinder: **Vieler, Fritz, Stormstrasse 31 a, D-5860 Iserlohn**
**(DE)**

(74) Vertreter: **Böning, Manfred, Dr. Ing. et al, Patentanwälte**
**Dipl.-Ing. Dieter Jander Dr. Ing. Manfred Böning**
**Kurfürstendamm 66, D-1000 Berlin 15 (DE)**

## Beschreibung

Die Erfindung betrifft ein Ablagemittel für Disketten, insbesondere 3,5" Disketten, mit mindestens einer zur Aufnahme jeweils einer Diskette dienenden Einschubtasche, mit gegenüberliegenden Vorder- und Rückseiten zwischen die die Diskette durch eine offene Seite einführbar ist, deren Rückseite aus einer schweissbaren Kunststoffhartfolie besteht.

Aus der DE-A-26 47 986 ist ein Ablagemittel der vorstehenden Art bekannt, bei dem eine oder mehrere Einschubtaschen von jeweils zwei sich teilweise überdeckenden, längs dreier Ränder miteinander verschweissten Folienabschnitten gebildet werden, von denen der vordere vorzugsweise aus durchsichtigem Material besteht. Die nach Art von Sichthüllen ausgebildeten Einschubtaschen des bekannten Ablagemittels eignen sich einerseits lediglich zur Aufnahme vergleichsweise flacher Disketten und geben den in sie eingeführten Disketten andererseits nur einen begrenzten Halt.

Der Erfindung liegt die Aufgabe zugrunde, ein Ablagemittel der in Betracht gezogenen Art zu schaffen, das sich insbesondere für die Aufbewahrung sogenannter 3,5" Disketten eignet, die in einem viereckigen Kunststoffgehäuse gelagert und aus diesem Grund deutlich stärker als andere bekannte Disketten sind, und das darüberhinaus die Gewähr für einen ausreichend sicheren Halt der Diskette in der Einschubtasche bietet.

Die vorstehende Aufgabe wird erfindungsgemäss dadurch gelöst, dass die Seitenteile und der Boden der Einschubtasche von tiefgezogenen, einen im wesentlichen U-förmigen Rahmen formenden über die Rückseite vorstehenden Abschnitten der Kunststoffhartfolie gebildet werden und die ebenfalls aus schweissbarer Kunststoffhartfolie bestehende Vorderseite der Einschubtasche als Klemmzunge für die jeweilige Diskette ausgebildet ist.

Das erfindungsgemässe Ablagemittel ermöglicht eine einwandfreie Aufbewahrung auch von geschützt in Gehäusen untergebrachten Disketten, da die Höhe des Rahmens leicht an die Stärke des Diskettengehäuses angepasst werden kann und durch die Klemmzunge ein unerwünschtes Herausgleiten der jeweiligen Diskette aus der Einschubtasche verhindert wird.

Weitere Einzelheiten und Merkmale der Erfindung ergeben sich aus den Unteransprüchen und der nachstehenden Beschreibung zweier in der beigefügten Zeichnung dargestellter Ausführungsbeispiele. Es zeigen:

Fig. 1 die Vorderansicht eines als Wendetafel ausgebildeten Ablagemittels für zwölf 3,5" Disketten;

Fig. 2 die Hinteransicht des Ablagemittels gemäss Fig. 1;

Fig. 3 in auseinandergezogener Darstellung einen Schnitt längs der Linie III–III in Fig. 1 unter Weglassung der seitlichen Manschetten des Ablagemittels und

Fig. 4 die Ansicht eines nach Art eines Buches ausgebildeten Ablagemittels für acht 3,5" Disketten im aufgeschlagenen Zustand.

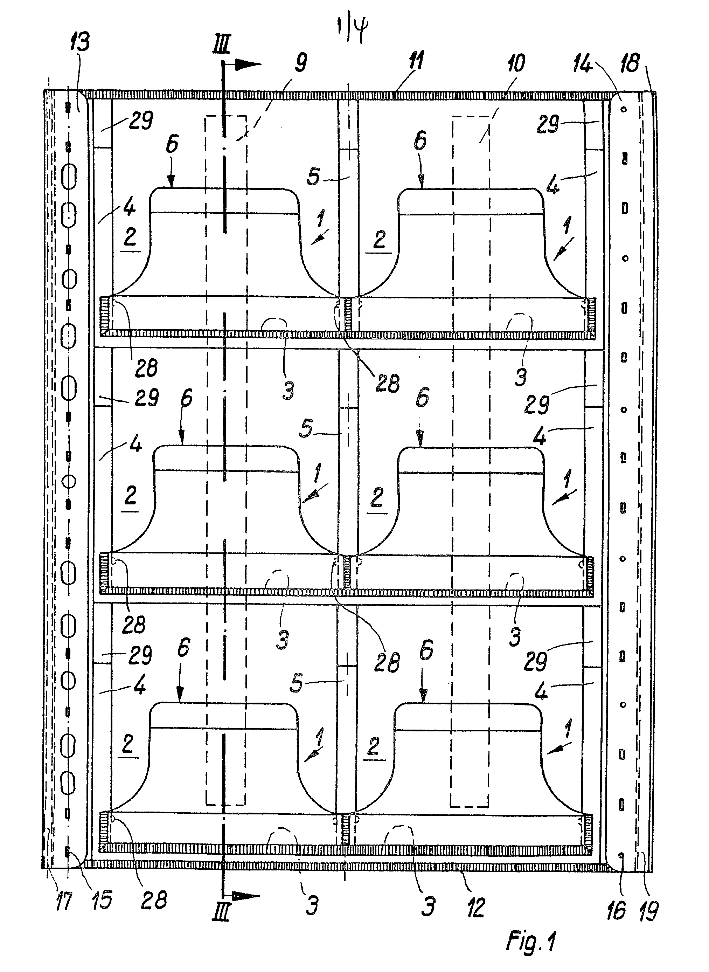

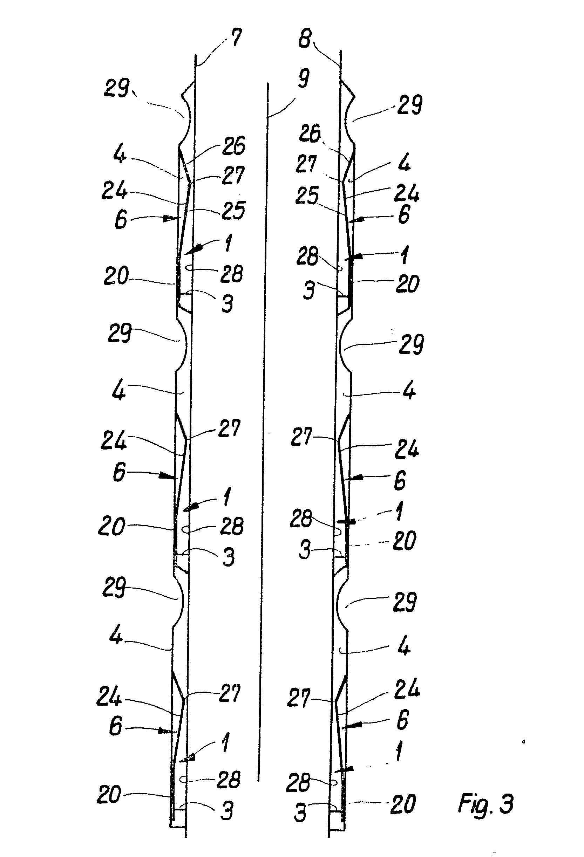

In den Figuren 1 bis 3 sind mit 1 mehrere Einschubtaschen bezeichnet, die zur Aufnahme von 3,5" Disketten dienen. Jede Einschubtasche 1 besitzt eine Rückseite 2, einen Boden 3, zwei Seitenteile 4 und 5 sowie eine von einer Klemmzunge 6 gebildete Vorderseite. Die Rückseiten 2 der Einschubtaschen werden von zwei Kunststoffhartfolien 7 und 8 (Fig. 3) gebildet, die im Bereich der Einschubtaschen 1 durch zwei beidseits mit Klebstoff beschichtete Klebestreifen 9 und 10 und längs ihres oberen und unteren Randes durch Schweissnähte 11 und 12 miteinander verbunden sind, während sie an ihren Längsrändern durch eine Scharniermanschette 13 und eine Tabmanschette 14 zusammengehalten werden, mit denen sie durch unterbrochene Schweissnähte 15 und 16 verbunden sind. Die von einem Strangpressprofil gebildete Scharniermanschette 13 besitzt einen Führungskanal 17 zur Aufnahme eines nicht dargestellten Schwenkstabes oder zweier Schwenkzapfen und die Tabmanschette 14 einen mit einem Längsschlitz 18 versehenen Führungskanal 19 zur Aufnahme eines mit einem geeigneten Verankerungsteil versehenen Tabes.

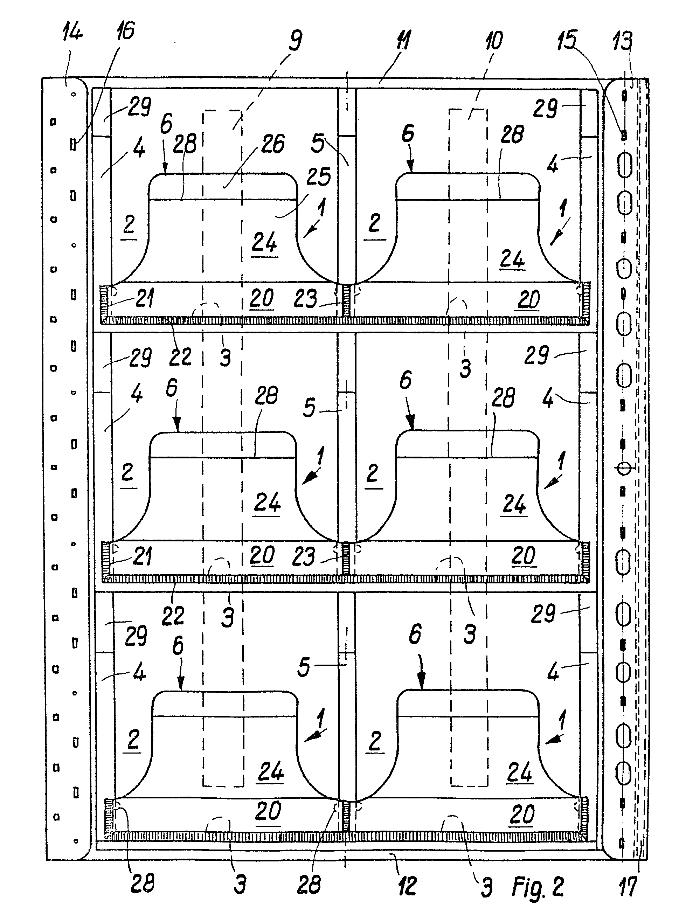

Die Seitenteile 4 und 5 sowie der Boden 3 der Einschubtasche 1 werden von tiefgezogenen Abschnitten der Kunststoffhartfolien 7 und 8 gebildet, die einen U-förmigen Rahmen formen, dessen Abmessungen auf die Abmessungen des Gehäuses der Disketten abgestimmt sind. Im Rahmen wird die Diskette kraftschlüssig durch jeweils mindestens eine Klemmzunge 6 gehalten, deren Fussteil 20 (Fig. 2) durch Schweissnähte 21, 22, 23 mit dem Rahmen verbunden ist. An den Fussteil 20 der Klemmzunge 6 schliesst sich ein Klemmteil 24 an, der zwei unter einem Winkel zueinander angeordnete Abschnitte 25 und 26 aufweist, die längs einer Scheitellinie 27 ineinander übergehen, die bei leerer Einschubtasche 1 vorzugsweise federnd gegen deren Rückseite 2 anliegt.

Die Einschubtaschen 1 weisen in der Nähe ihres Bodens 3 Arretierungsnocken 28 auf, die in entsprechende Arretierungslöcher des Gehäuses der abzulegenden Disketten passen und deren einwandfreien Sitz in den Einschubtaschen fördern. Um gleichwohl eine einfache Entnahme von Disketten sicherzustellen, sind die Seitenteile 4 und 5 der Rahmen mit Griffmulden 29 versehen.

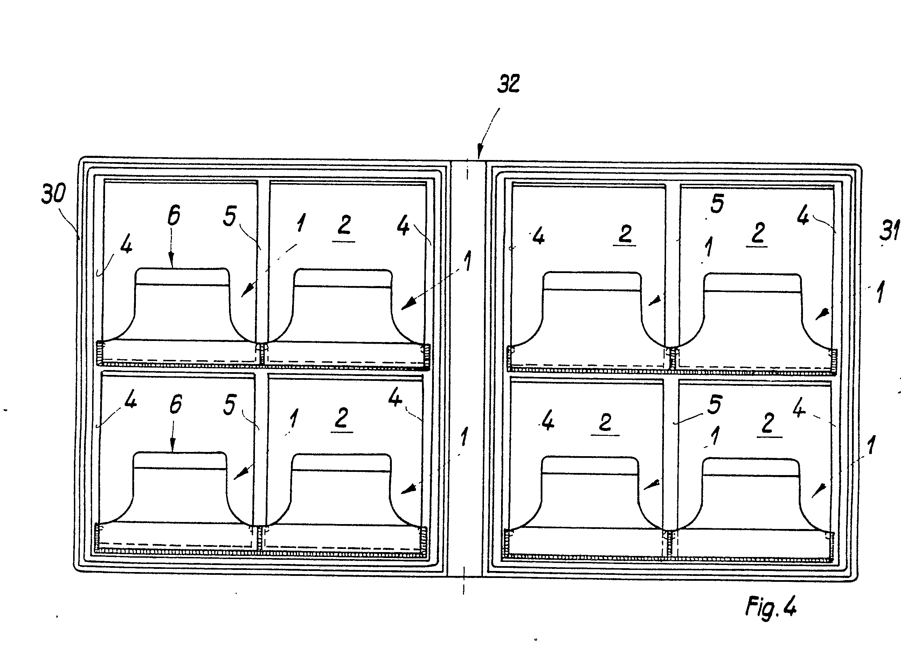

Das in Fig. 4 dargestellte weitere Ausführungsbeispiel eines Ablagemittels stimmt hinsichtlich des Aufbaues der Einschubtaschen mit dem zuerst beschriebenen Ausführungsbeispiel überein. Im Unterschied zur ersten Lösung sind hier jedoch die die Rückseiten 2 der Einschubtaschen 1 bildenden Kunststoffhartfolien mit den Innenseiten der Deckel 30 und 31 einer buchförmigen Sammelmappe 32 verbunden.

## Patentansprüche

1. Ablagemittel für Disketten mit mindestens einer zur Aufnahme jeweils einer Diskette dienenden Einschubtasche mit gegenüberliegenden Vorder- und Rückseiten, zwischen die die Diskette durch eine offene Seite einführbar ist, deren Rückseite aus einer schweissbaren Kunststoffhartfolie besteht, dadurch gekennzeichnet, dass die Seitenteile (4, 5) und der Boden (3) der Einschubtasche (1) von tiefgezogenen, einen im wesentlichen U-förmigen Rahmen formenden, über die Rückseite vorstehenden Abschnitten der Kunststoffhartfolie (7, 8) gebildet werden und die ebenfalls aus schweissbarer Kunststoffhartfolie bestehende Vorderseite der Einschubtasche (1) als Klemmzunge (6) für die jeweilige Diskette ausgebildet ist.

2. Ablagemittel nach Anspruch 1, dadurch gekennzeichnet, dass die Klemmzunge (6) durch Schweissnähte (21, 22, 23) mit Teilen des Rahmens verbunden ist.

3. Ablagemittel nach Anspruch 1 oder 2, dadurch gekennzeichnet, dass die Klemmzunge (6) einen die Seitenteile (4, 5) des Rahmens miteinander verbindenden Fussteil (20) und einen sich hieran anschliessenden Klemmteil (24) aufweist.

4. Ablagemittel nach Anspruch 3, dadurch gekennzeichnet, dass der Fussteil (20) der Klemmzunge (6) einen Informationsträgerstreifen bildet.

5. Ablagemittel nach Anspruch 3 oder 4, dadurch gekennzeichnet, dass der Klemmteil (24) der Klemmzunge (6) zwei unter einem Winkel zueinander angeordnete Abschnitte (25, 26) aufweist, die längs einer Scheitellinie (27) ineinander übergehen, die bei leerer Einschubtasche (1) federnd gegen deren Rückseite (2) anliegt.

6. Ablagemittel nach einem der Ansprüche 1 bis 5, dadurch gekennzeichnet, dass in der Nähe des Bodens (3) der Einschubtasche (1) Arretierungsnocken (28) für eine entsprechende Arretierungslöcher aufweisende Diskette angeordnet sind.

7. Ablagemittel nach einem der Ansprüche 1 bis 6, dadurch gekennzeichnet, dass die Rückseiten (2), Seitenteile (4, 5) und Böden (3) mehrerer Einschubtaschen (1) von ein und derselben Kunststoffhartfolie (7, 8) gebildet werden.

8. Ablagemittel nach einem der Ansprüche 1 bis 7, dadurch gekennzeichnet, dass jeweils mindestens ein Seitenteil (4, 5) einer Einschubtasche (1) mit einer Griffmulde (29) versehen ist.

9. Ablagemittel nach einem der Ansprüche 1 bis 8, dadurch gekennzeichnet, dass jeweils paarweise nebeneinander angeordnete Einschubtaschen (1) ein gemeinsames Seitenteil (5) aufweisen.

10. Ablagemittel nach einem der Ansprüche 1 bis 9, dadurch gekennzeichnet, dass zwei Rückseiten (2) miteinander verbunden und an ihrem einen Längsrand mit einer Scharniermanschette (13) versehen sind.

11. Ablagemittel nach Anspruch 10, dadurch gekennzeichnet, dass die Rückseiten (2) an ihrem der Scharniermanschette (13) abgewandten Längsrand mit einer Tabmanschette (14) versehen sind.

12. Ablagemittel nach einem der Ansprüche 1 bis 9, dadurch gekennzeichnet, dass die die Rückseiten (2) mindestens zweier Einschubtaschen (1) bildende Kunststoffhartfolie mit den Innenseiten der Deckel (30, 31) einer buchförmigen Sammelmappe (32) verbunden sind.

13. Ablagemittel nach einem der Ansprüche 10 bis 12, dadurch gekennzeichnet, dass die Rückseiten (2) der Einschubtaschen (1) über beidseits beschichtete Klebestreifen (9, 10) miteinander bzw. mit den Innenseiten der Deckel (30, 31) verbunden sind.

14. Ablagemittel nach einem der Ansprüche 1 bis 13, dadurch gekennzeichnet, dass die Ränder der die Rückseiten (2) bildenden Kunststoffhartfolie (7, 8) durch Schweissnähte (11, 12, 15, 16) miteinander verbunden sind.

**Revendications**

1. Moyen de classement pour disquettes comportant au moins une pochette destinée à recevoir une disquette, avec une face avant et un dos opposés, entre lesquels la disquette est introduite par un côté ouvert, et dont le dos est réalisé dans une feuille en matière plastique rigide soudable, caractérisé en ce que les éléments latéraux (4, 5) et le fond (3) de la pochette (1) sont formés par des sections de la feuille en matière plastique rigide (7, 8), obtenues par emboutissage profond, formant un cadre sensiblement en U et faisant saillie par rapport au dos, et en ce que la face avant de la pochette (1), réalisée de même dans une feuille en matière plastique rigide soudable, constitue une languette de serrage (6) pour la disquette concernée.

2. Moyen de classement selon la revendication 1, caractérisé en ce que la languette de serrage 6 est assemblée à des parties du cadre par des soudures (21, 22, 23).

3. Moyen de classement selon la revendication 1 ou 2, caractérisé en ce que la languette de serrage (6) présente un élément formant pied (20) assemblant entre eux les éléments latéraux (4, 5) du cadre ainsi qu'un élément de serrage (24) s'y raccordant.

4. Moyen de classement selon la revendication 3, caractérisé en ce que l'élément formant pied (20) de la languette de serrage (6) forme une bande servant de support d'information.

5. Moyen de classement selon la revendication 3 ou 4, caractérisé en ce que l'élément de serrage (24) de la languette de serrage (6) présente deux sections (25, 26) formant un dièdre entre elles et qui se, prolongent l'une par l'autre le long d'une ligne d'arête (27), laquelle s'applique en formant ressort contre le dos (2), lorsque la pochette (1) est vide.

6. Moyen de classement selon l'une des revendications 1 à 5, caractérisé en ce que des cames d'arrêt (28) destinées à une disquette présentant des perforations d'arrêt correspondantes, sont disposées à proximité du fond (3) de la pochette (1).

7. Moyen de classement selon l'une des revendications 1 à 6, caractérisé en ce que les dos (2), les éléments latéraux (4, 5) et les fonds (3) de plusieurs pochettes (1) sont formés par une seule et même feuille en matière plastique rigide (7, 8).

8. Moyen de classement selon l'une des revendications 1 à 7, caractérisé en ce qu'un élément latéral (4, 5) au moins d'une pochette (1) est pourvu découpe de préhension (29).

9. Moyen de classement selon l'une des revendications 1 à 8, caractérisé en ce que deux pochettes (1) juxtaposées par paire présentent un élément latéral (5) commun.

10. Moyen des classement selon l'une des revendications 1 à 9, caractérisé en ce que deux dos (2) sont assemblés entre eux et pourvus sur l'un de leurs bords longitudinaux, d'une bande de charnière (13).

11. Moyen de classement selon la revendication 10, caractérisé en ce que les dos (2) sont pouvus sur leur bord longitudinal opposé à la bande de charnière (13), d'une bande pour cavaliers (14).

12. Moyen de classement selon l'une des revendications 1 à 9, caractérisé en ce que la feuille en matière plastique rigide formant les dos (2) d'au moins deux pochettes (1), est assemblée aux faces internes des couvertures (30, 31) d'un classeur (32) en forme de livre.

13. Moyen de classement selon l'une des revendications 10 à 12, caractérisé en ce que les dos (2) des pochettes (1) sont assemblés entre eux ou aux faces internes des couvertures (30, 31) par des bandes adhésives (9, 10) double face.

14. Moyen de classement selon l'une des revendications 1 à 13, caractérisé en ce que les bords de la feuille en matière plastique (7, 8) formant les dos (2), sont assemblés entre eux par des soudures (11, 12, 15, 16).

## Claims

1. A means for filling floppy disks comprising at least one slide-in compartment for holding a disk and having a front and a back disposed opposite one another and between which the disk can be inserted through an open side the break consisting of a hard plastic sheet, characterized in that the side parts (4, 5) and the base (3) of the compartment (1) are made from deepdrawn portions (7, 8) of the hard plastics sheet projecting beyond the back and forming a substantially U-shaped frame, and the front of the compartment (1), which is likewise made from a weldable hard plastics sheet, is constructed as a tongue (6) for clamping each respective floppy disk.

2. A means according to claim 1, characterised in that the clamping tongue (6) is connected to parts of the frame by weld seams (21, 22, 23).

3. A means according to claim 1 or 2, characterised in that the tongue (6) comprises a base (20) interconnecting the side parts (4, 5) of the frame and an adjacent clamping part (24).

4. A means according to claim 3, characterised in that the base (20) of the clamping tongue (6) forms an information-bearing strip.

5. A means according to claim 3 or 4, characterised in that the clamping part (24) of the tongue (6) has two portions (25, 26) at an angle to one another and merging into one another along a summit line (27) and abutting resiliently against the back (2) of the compartment (1) when empty.

6. A means according to any of claims 1 to 5, characterised in that locking cams (28) for a floppy disk formed with corresponding locking holes are disposed near the base (3) of the slide-in compartment (1).

7. A means according to any of claims 1 to 6, characterised in that the backs (2), sides (4, 5) and bases (3) of a number of slide-in compartments (1) are formed by the same sheet of hard plastics (7, 8).

8. A means according to any of claims 1 to 7, characterised in that at least one side part (4, 5) of each compartment (1) has a recessed grip (29).

9. A means according to any of claims 1 to 8, characterised in that each pair of ajdacent slide-in compartments (1) has a common side part (5).

10. A means according to any of claims 1 to 9, characterised in that two backs (2) are interconnected and have a hinged sleeve (13) on one longitudinal edge.

11. A means according to claim 10, characterised in that the backs (2) have a tab sleeve (14) on their longitudinal edge remote from the hinged sleeve (30).

12. A means according to any of claims 1 to 9, characterised in that the hard plastics sheet forming the backs (2) of at least two slide-in compartments (1) are connected to the inner sides of the covers (30, 31) of a book-like collective folder (32).

13. A means according to any of claims 10 to 12, characterised in that the backs (2) of the compartments (1) are connected to one another or to the insides of the covers (30, 31) by adhesive strips (9, 10) coated on both sides.

14. A means according to any of claims 1 to 13, characterised in that the edges of the hard plastics sheet (7, 8) forming the backs (2) are interconnected by weld seams (11, 12, 15, 16).

Fig.1

2|4

Fig. 2

3/4

Fig. 3

EP 0 177 435 B1

4/4

Fig. 4

11